# EUROPÄISCHE PATENTANMELDUNG

(11) **EP 4 228 145 A1**
(43) Veröffentlichungstag der Anmeldung: **16.08.2023**
(21) Anmeldenummer: 23153451.2
(22) Anmeldetag: 26.01.2023
(51) Int. Cl.: H02P 6/00

(54) **ANORDNUNG ZUM BETREIBEN EINES ELEKTROMOTORS IN EINEM FAHRZEUG**

(30) Priorität: 10.02.2022 DE 102022103093
(71) Anmelder: Webasto SE, 82131 Stockdorf (DE)
(72) Erfinder: HAEUSSERMANN, Rudolf, 82131 Stockdorf (DE); WITTICH, Peter, 82131 Stockdorf (DE); FERSCH, Franz, 82131 Stockdorf (DE); FEKETE, Imre, 82131 Stockdorf (DE); KREHER, Jens, 82131 Stockdorf (DE)
(74) Vertreter: Prüfer & Partner mbB Patentanwälte · Rechtsanwälte

(57) **Zusammenfassung**

Die Erfindung betrifft eine Anordnung (10) zum Betreiben eines Elektromotors (M), beispielsweise eines Elektromotors (M) zum Betätigen einer Dachkomponente, in einem Fahrzeug. Dabei ist der Elektromotor (M) über zumindest zwei Ansteuerungsleitungen (A, B) mit einer Motor-Steuereinheit (20) elektrisch verbunden. Die Motor-Steuereinheit (20) ist zum Ansteuern des Elektromotors (M) mittels Pulsweitenmodulation eingerichtet. Die Motor-Steuereinheit (20) ist dazu eingerichtet, beim Ansteuern des Elektromotors (M) eine erste der zwei Ansteuerungsleitungen (A, B) als ruhige Leitung zu betreiben und eine zweite der zwei Ansteuerungsleitungen (B, A) als aktive Leitung zu betreiben. Ein dem Elektromotor (M) zugeordnetes Umschaltungsmodul (14) ist dazu eingerichtet, während des Betriebs des Elektromotors (M) einen Anschluss (15) eines Poltopfes des Elektromotors (M) mit der als ruhige Leitung betriebenen Ansteuerungsleitung (A, B) zu verbinden. Die Erfindung betrifft ferner einen Elektromotor (M) sowie ein Verfahren zum Betreiben eines Elektromotors (M), beispielsweise eines Elektromotors (M) zum Betätigen einer Dachkomponente, in einem Fahrzeug.

## Beschreibung

Die Erfindung betrifft eine Anordnung zum Betreiben eines Elektromotors, beispielsweise eines Elektromotors zum Betätigen einer Dachkomponente, in einem Fahrzeug.

Gleichstrom-Elektromotoren, wie sie etwa für Schiebedächer, Fensterheber und andere Einrichtungen in Fahrzeugen verwendet werden, werden oft mit einem Pulsweitenmodulationssignal (*pulse width modulation,* PWM) zur Drehzahlregelung betrieben. Bei einem räumlichen Abstand zwischen dem Steuergerät und dem anzusteuernden Motor muss das PWM-Signal über einen Kabelbaum geführt werden, je nach Anwendungsfall über eine längere Strecke und durch Bereiche, die für elektromagnetische Störungen anfällig sind.

Zur Ansteuerung des Motors in diesem Aufbau werden regelmäßig genau zwei Motorleitungen verwendet, gegebenenfalls ergänzt durch Leitungen für Sensorsignale. Eine separate Masseleitung ist nicht vorgesehen.

Typische Motoren, soweit sie als Bürstenmotoren ausgebildet sind, sind ferner mit einer Schaltung zur Unterdrückung des Bürstenfeuers ausgestattet. Dieser enthält unter anderem je einen Kondensator pro Anschluss gegen den Poltopf, der somit über einen kapazitiven Spannungsteiler in der Mitte der beiden Motorleitungen angeordnet ist. Der Poltopf hat daher stets den halben Spannungspegel des PWM-Signals.

Aufgrund seiner großen Fläche kann der Poltopf dieses Signal in die Fahrzeugantenne einkoppeln, was zu Störungen des Radioempfangs führt, insbesondere im Mittelwellenbereich.

Zur Reduktion solcher Störungen wurden bisher beispielsweise die Kapazitäten reduziert, die zur Unterdrückung des Bürstenfeuers im Motor eingesetzt werden. Diese Reduzierung der Kapazitäten im Motor führt jedoch zu Problemen bei der Bedämpfung des Bürstenfeuers. Abgesehen davon reicht dies als alleinige Maßnahme nicht aus, da so immer noch Störungen in Kauf genommen werden müssen.

Ferner kann eine zusätzliche Masseleitung genutzt werden, um den Poltopf zu erden und die Entstehung der ausgekoppelten Strahlung zu vermeiden. Eine Masseleitung verursacht jedoch zusätzliche Kosten und erfordert eine Erweiterung der Steckerpins für entsprechende Anschlüsse. Ferner kann es durch den Rückstrom zu weiteren Störungen kommen.

Da beim PWM-Betrieb jeweils nur eine Leitung aktiv ist, wurde zudem versucht, durch Verbinden des Poltopfes mit einer der beiden Leitungen zum Betreiben des Motors ein Gegensignal einzukoppeln und die Störung auf diese Weise zu unterbinden. Dies behebt das Problem allerdings nur beim Betrieb des Motors in eine Drehrichtung - bei der jeweils anderen Drehrichtung verstärkt sich der Effekt.

Auch bei bürstenlosen Motoren kann es jedoch zu elektromagnetischen Störungen kommen.

In der DE 10 2017 111 396 B4 wird eine Anordnung zur aktiven Unterdrückung von Störsignalen beschrieben. Dabei wird ein EMV-Filter verwendet und seine Anordnung beschrieben.

Es ist die Aufgabe der Erfindung, eine Anordnung der eingangs bezeichneten Art bereitzustellen, die eine besonders effiziente und kostengünstig implementierbare Entstörung ermöglicht.

Diese Aufgabe wird durch eine Vorrichtung der eingangs genannten Art mit den Merkmalen des Anspruchs 1 gelöst. Vorteilhafte Ausgestaltungen und Weiterbildungen der Erfindung sind in den abhängigen Ansprüchen angegeben.

Bei der Anordnung zum Betreiben eines Elektromotors, beispielsweise eines Elektromotors zum Betätigen einer Dachkomponente, in einem Fahrzeug, ist der Elektromotor über zumindest zwei Ansteuerungsleitungen mit einer Motor-Steuereinheit elektrisch verbunden. Dabei ist die Motor-Steuereinheit zum Ansteuern des Elektromotors mittels Pulsweitenmodulation eingerichtet. Die Motor-Steuereinheit ist dazu eingerichtet, beim Ansteuern des Elektromotors eine erste der zwei Ansteuerungsleitungen als ruhige Leitung zu betreiben und eine zweite der zwei Ansteuerungsleitungen als aktive Leitung zu betreiben. Ein dem Elektromotor zugeordnetes Umschaltungsmodul ist dazu eingerichtet, während des Betriebs des Elektromotors einen Anschluss des Poltopfes des Elektromotors mit der als ruhige Leitung betriebenen Ansteuerungsleitung zu verbinden.

Dadurch wird vorteilhafterweise erreicht, dass das Bürstenfeuer unterdrückt werden kann, ohne dabei elektromagnetische Störungen zu erzeugen.

Ein grundlegender Gedanke der Erfindung beruht darauf, dass die ruhige Leitung verwendet wird, um eine Erdung des Poltopfes zu erreichen. Diese Leitung kann genutzt werden, da die eigentliche Steuerung des Motors über die aktive Leitung erfolgt. Das heißt, es kann eine effiziente Entstörung des resultierenden Systems erreicht werden, ohne dass hierfür viele weitere Elemente ergänzt werden müssen. Die Erfindung kann daher kosteneffizient und ohne Änderungen an weiteren Elementen integriert werden.

Einige der Vorteile der Erfindung sind also die Unabhängigkeit von dem verwendeten Steuergerät, die Möglichkeit des Betriebs mit einem nur zweiadrigen Kabel, das heißt ohne die Notwendigkeit zusätzlich bereitgestellter Spannungen oder Signale, sowie die Integrationsmöglichkeit in bestehende oder verfügbare Motoren, ohne Änderungen am Motor selbst.

Bei einer Ausbildung der Vorrichtung ist der Elektromotor zum Betätigen einer Dachkomponente des Fahrzeugs eingerichtet. Eine solche Dachkomponente kann beispielsweise zum Verschieben eines Dachfensters oder Dachrollos eingerichtet sein. In dem Fahrzeug können aber auch andere Einsatzbereiche und entsprechende Elektromotoren vorgesehen sein, etwa zum Betätigen oder Verstellen einer anderen Komponente, etwa eines Fensters, einer Heckklappe, einer Tür oder ähnlichem.

Bei einer weiteren Ausbildung ist der Elektromotor als Gleichstrommotor ausgebildet. Ein solcher Motor kann direkt mittels Pulsweitenmodulation angesteuert werden.

Der Gleichstrommotor kann beispielsweise ein bürstenloser Gleichstrommotor ("*brushless DC motor",* BLDC-Motor) sein.

Der Elektromotor kann insbesondere ein Innenläufermotor sein. Ferner ist die Verwendung eines Außenläufermotors denkbar.

Der Gleichstrommotor kann ferner ein Bürstenmotor sein.

Bei einer Weiterbildung ist der Elektromotor mit einer Schaltung zum Unterdrücken eines Bürstenfeuers versehen, die beispielsweise einen kapazitiven Spannungsteiler umfasst. Dadurch wird vorteilhafterweise ein weiter störungsfreier Betrieb des Elektromotors erreicht.

Die Schaltung zum Unterdrücken eines Bürstenfeuers kann beispielsweise einen kapazitiven Spannungsteiler umfassen, wobei zum Beispiel je ein Kondensator pro Anschluss gegen den Poltopf vorgesehen ist. Der Poltopf ist dadurch über den kapazitiven Spannungsteiler in der Mitte der beiden Ansteuerungsleitungen angeordnet und wird stets auf dem halben Spannungspegel des PWM-Signals, welches über die aktive Leitung bereitgestellt wird, betrieben.

Bei einer Ausbildung ist das Umschaltungsmodul in eine Motorplatine und/oder in ein Gehäuse des Elektromotors integriert. Dadurch wird vorteilhafterweise erreicht, dass die Entstörung des Elektromotors direkt bei der Herstellung des Motors adressiert werden kann. Das heißt, der Motorhersteller oder -lieferant kann einen Elektromotor mit vorteilhaften Entstörungseigenschaften bereitstellen, ohne dass hierzu beispielsweise Änderungen an der Motor-Steuereinheit notwendig sind. Die Steuereinheit kann daher unabhängig davon verwendet werden, welche Entstörung des Elektromotors gewünscht ist. Insbesondere ist der Elektromotor der Erfindung daher besonders flexibel einsetzbar und kompatibel mit einer Vielzahl von Motor-Steuereinheiten.

Insbesondere kann das Umschaltungsmodul einen Halbleiterschalter umfassen. Dies erleichtert die schnelle und effiziente Umschaltung je nach der Richtung, mit welcher der Elektromotor betrieben wird, und je nach der demnach aktiv betriebenen Ansteuerungsleitung.

Bei einer Weiterbildung umfasst das Umschaltungsmodul einen Feldeffekttransistor (FET), insbesondere einen Metall-Oxid-Feldeffekttransistor (MOSFET). Dabei ist insbesondere ein erstes und ein zweites Umschaltungsmodul für die erste und zweite Ansteuerungsleitung der Anordnung vorgesehen.

Diese Bauteile erlauben einen besonders kompakten und effizient arbeitenden Aufbau mit einem Halbleiterschalter.

Bei einer weiteren Ausbildung umfasst das Umschaltungsmodul eine Diode, insbesondere einen mit einer Diode und einem Widerstand ausgebildeten Gleichrichter. Dadurch wird vorteilhafterweise erreicht, dass ein Halbleiterschalter oder ein ähnliches Bauteil einfach angesteuert werden kann, um die gewünschte Umschaltung und Verbindung des Poltopfes mit der ruhigen Leitung zu erhalten.

Alternativ oder zusätzlich kann ein anderes Bauelement als Schalter vorgesehen sein, insbesondere zum Durchführen einer aktiven Umschaltung auf ein Steuersignal hin. Dabei kann ferner eine Detektionsschaltung vorgesehen sein, welche von der Motorplatine integriert sein kann und die bestimmt, welche der Ansteuerungsleitungen als ruhige Leitung betrieben wird, und die dann die entsprechende Umschaltung veranlasst.

Bei einer Ausbildung umfasst das Umschaltungsmodul einen Bipolartransistor oder ein Relais.

Der Elektromotor für ein Fahrzeug, beispielsweise zum Betätigen einer Dachkomponente des Fahrzeugs, umfasset zumindest zwei Anschlüsse zum Anschließen einer ersten und einer zweiten Ansteuerungsleitung. Dabei ist der Elektromotor über die Anschlüsse mittels Pulsweitenmodulation ansteuerbar. Beim Ansteuern des Elektromotors ist eine erste der zwei Ansteuerungsleitungen als ruhige Leitung betreibbar und eine zweite der zwei Ansteuerungsleitungen ist als aktive Leitung betreibbar. Dabei ist dem Elektromotor ein Umschaltungsmodul zugeordnet, welches dazu eingerichtet ist, während des Betriebs des Elektromotors einen Anschluss des Poltopfes des Elektromotors mit der als ruhige Leitung betriebenen Ansteuerungsleitung zu verbinden.

Das Umschaltungsmodul kann dabei in einer Motorplatine integriert sein, welche wiederum Bestandteil des Elektromotors sein kann.

Bei dem Verfahren zum Betreiben eines Elektromotors, beispielsweise eines Elektromotors zum Betätigen einer Dachkomponente, in einem Fahrzeug wird der Elektromotor mittels Pulsweitenmodulation über zumindest zwei Ansteuerungsleitungen angesteuert. Dabei wird beim Ansteuern des Elektromotors eine erste der zwei Ansteuerungsleitungen als ruhige Leitung und eine zweite der zwei Ansteuerungsleitungen als aktive Leitung betrieben. Ein Umschaltungsmodul verbindet während des Betriebs des Elektromotors einen Anschluss eines Poltopfes des Elektromotors mit der als ruhige Leitung betriebenen Ansteuerungsleitung.

Das Verfahren ist insbesondere dazu ausgebildet, die Anordnung und den Elektromotor zu betreiben. Es weist daher dieselben Vorteile auf wie die erfindungsgemäße Anordnung und er Elektromotor.

Nachfolgend wird die Erfindung anhand der anliegenden Zeichnungen näher erläutert. Es zeigen:
- **Figur 1**: ein Ausführungsbeispiel der Anordnung;
- **Figur 2**: eine Detailansicht des Ausführungsbeispiels der Anordnung; und
- **Figur 3**: eine weitere Detailansicht des Ausführungsbeispiels der Anordnung.

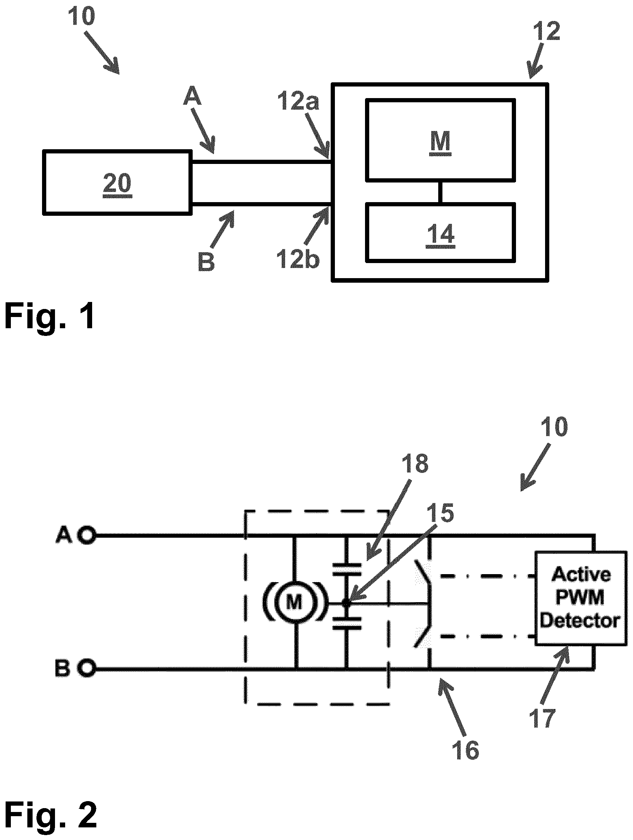

Mit Bezug zu den **Figuren 1 bis 3** wird ein Ausführungsbeispiel der Anordnung erläutert.

Die Anordnung 10 umfasst bei dem Ausführungsbeispiel eine Steuereinheit 20. Diese muss bei weiteren Ausführungsbeispielen nicht von der Anordnung 10 umfasst sein, sondern kann auch als externe Einheit daran angeschlossen werden.

Es ist ferner eine Motorplatine 12 vorgesehen.

Mit der Motorplatine 12 sind ein Elektromotor M und ein damit verbundenes Umschaltmodul 14 gekoppelt.

Bei dem Ausführungsbeispiel ist der Elektromotor M als Bürstenmotor ausgebildet.

Bei weiteren Ausführungsbeispielen kann vorgesehen sein, dass der Elektromotor als BLDC-Motor ausgebildet ist.

Die Motorplatine 12 weist ferner Anschlüsse 12a, 12b auf, die als Versorgungsanschlüsse ausgebildet sind. Das heißt, über die Anschlüsse 12a, 12b wird elektrische Spannung zum Betrieb des Elektromotors M bereitgestellt. Ferner können Hilfssignale bereitgestellt werde, die im Folgenden nicht betrachtet werden sollen.

Bei dem Beispiel sind die Motorplatine, der Elektromotor M und das Umschaltungsmodul 14 in einem gemeinsamen Gehäuse angeordnet oder auf andere Weise miteinander integriert ausgebildet. Die Anschlüsse 12a, 12b sind in diesem Fall von außerhalb des Gehäuses zugänglich beziehungsweise mit externen Einheiten verbindbar.

Die Anschlüsse 12a, 12b sind mit jeweils einer von zwei Ansteuerungsleitungen A, B verbunden.

Die Steuereinheit 20 erzeugt Signale zum Betreiben des Elektromotors M mittels Pulsweitenmodulation (PWM). Dabei werden die Signale über eine Ansteuerungsleitung A als "aktive Leitung" übertragen, während die andere Ansteuerungsleitung B in diesem Fall als "ruhige Leitung" betrieben wird.

Die Wahl der aktiven beziehungsweise ruhigen Leitung entscheidet sich je nachdem, mit welcher Drehrichtung der Elektromotors M betrieben werden soll. Die jeweils andere, als ruhige Leitung betriebene Ansteuerungsleitung B liegt auf Masse, sie ist also geerdet.

Bei dem Ausführungsbeispiel weist der Elektromotor M eine Schaltung zum Unterdrücken des Bürstenfeuers während des Betriebs auf. Diese Schaltung umfasst bei dem Ausführungsbeispiel einen kapazitiven Spannungsteiler 18 mit je einem Kondensator pro Anschluss. Dieser Spannungsteiler ist mit einem Poltopf des Elektromotors über einen Poltopfanschluss 15 verbunden. Der Poltopf ist daher zwischen den beiden Ansteuerungsleitungen angeordnet und wird stets auf dem halben Spannungspegel des PWM-Signals gehalten.

Bei einem Ausführungsbeispiel, bei dem der Elektromotor als BLDC-Motor ausgebildet ist, können weitere Schaltungen vorgesehen sein, die zu elektromagnetischen Störungen führen können oder die solche Störungen dämpfen.

Bei der Anordnung 10 des Ausführungsbeispiels ist das Umschaltungsmodul 14 vorgesehen, um den Poltopf automatisch mit der jeweils als ruhige Leitung betriebenen Anschlussleitung A, B zu verbinden.

Allgemein ausgedrückt ist dazu ein aktiver PWM-Detektor vorgesehen, nämlich eine Detektionsschaltung 17. Diese ist mit den Ansteuerungsleitungen A, B verbunden und dient dazu zu detektieren, welche Ansteuerungsleitung A, B aktuell als ruhige Leitung betrieben wird. In Abhängigkeit von dem Ergebnis der Detektion wird eine Schalteinrichtung, etwa ein Halbleiterschalter 16, angesteuert, um den Poltopfanschluss 15 mit der ruhigen Leitung zu verbinden.

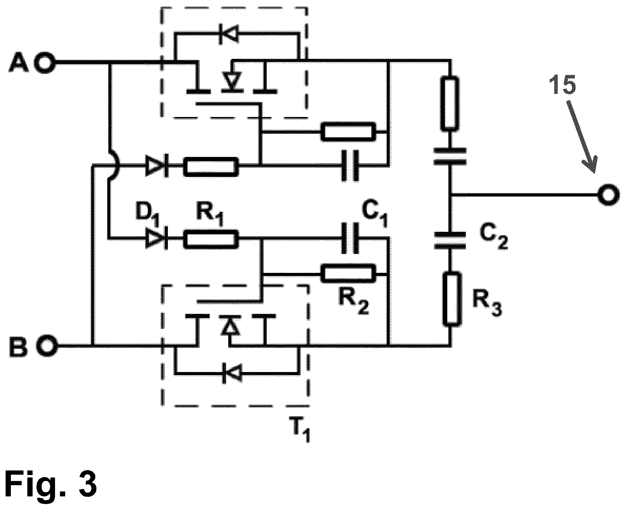

Eine solche Schaltung ist in einer konkreten Ausführungsform in Figur 3 gezeigt. Da die Schaltung symmetrisch aufgebaut ist, ist lediglich eine Hälfte mit Bezugszeichen versehen. Die andere Hälfe ist entsprechend aufgebaut und ebenfalls in Figur 3 gezeigt.

Bei dem Ausführungsbeispiel bildet eine Diode D₁ mit einem Kondensator C₁ einen Gleichrichter. Dieser ist mit der ersten Ansteuerungsleitung A gekoppelt. Ein zwischen der Diode D₁ und dem Kondensator C₁ angeordneter Widerstand R₁ dient dabei zur Strombegrenzung. Ferner ist ein weiterer Widerstand R₂ vorgesehen, über den eine Entladung des Kondensators C₁ erfolgt.

Zwischen dem Widerstand R₁ und dem Kondensator C₁ ist der Gate-Eingang eines in der zweiten Ansteuerungsleitung B angeordneten Halbleiterschalters T₁ angeschlossen.

In einem ersten Fall, bei dem die erste Anschlussleitung A als aktive Leitung bei der PWM-Ansteuerung des Elektromotors M betrieben wird, liegt am Gate des Halbleiterschalters T₁ die über die Anschlussleitung A bereitgestellte Spannung an. Dies sind bei einer üblichen PWM-Steuerung etwa 12V. Bei weiteren Ausführungsbeispielen können andere Spannungswerte vorgesehen sein.

Ein Transistor des Halbleiterschalters T₁ wird dadurch in einen leitenden Zustand geschaltet und der Poltopfanschluss 15 wird folglich über einen weiteren Kondensator C₂ und einen weiteren Widerstand R₃ mit der Anschlussleitung B verbunden, die in diesem Fall als ruhige Leitung betrieben wird.

Gleichzeitig ist in diesem Fall die Verbindung zwischen dem Poltopfanschluss 15 und der Ansteuerungsleitung A unterbrochen, da bei dem symmetrisch aufgebauten Zweig in diesem Fall keine Gate-Spannung am Gate des dort vorgesehenen Transistors anliegt.

Der weitere Kondensator C₂ in der Verbindung zwischen der Ansteuerungsleitung B und dem Poltopfanschluss 15 dient zur Vermeidung von eventuell auftretenden Kurzschlussströmen. Der vorgeschaltete weitere Widerstand R₃ dämpft gegebenenfalls auftretende Schwingungen, zu denen es zwischen den Entstörkondensatoren und der Zuleitung kommen kann.

### Bezugszeichenliste

- 10: Anordnung
- 12: Motorplatine
- 12a, 12b: Anschluss
- 14: Umschaltungsmodul
- 15: Poltopfanschluss
- 16: Halbleiterschalter
- 17: Detektionsschaltung
- 18: Kapazitiver Spannungsteiler
- 20: Steuereinheit
- A: Ansteuerungsleitung
- B: Ansteuerungsleitung
- C₁, C₂: Kondensator
- D₁: Diode
- M: Elektromotor
- R₁, R₂, R₃: Widerstand
- T₁: Halbleiterschalter, MOSFET

## Patentansprüche

1. Anordnung (10) zum Betreiben eines Elektromotors (M), beispielsweise eines Elektromotors (M) zum Betätigen einer Dachkomponente, in einem Fahrzeug, wobei
der Elektromotor (M) über zumindest zwei Ansteuerungsleitungen (A, B) mit einer Motor-Steuereinheit (20) elektrisch verbunden ist; wobei
die Motor-Steuereinheit (20) zum Ansteuern des Elektromotors (M) mittels Pulsweitenmodulation eingerichtet ist; wobei
die Motor-Steuereinheit (20) dazu eingerichtet ist, beim Ansteuern des Elektromotors (M) eine erste der zwei Ansteuerungsleitungen (A, B) als ruhige Leitung zu betreiben und eine zweite der zwei Ansteuerungsleitungen (B, A) als aktive Leitung zu betreiben; und wobei
ein dem Elektromotor (M) zugeordnetes Umschaltungsmodul (14) dazu eingerichtet ist, während des Betriebs des Elektromotors (M) einen Anschluss (15) eines Poltopfes des Elektromotors (M) mit der als ruhige Leitung betriebenen Ansteuerungsleitung (A, B) zu verbinden.

2. Anordnung (10) gemäß Anspruch 1,
**dadurch gekennzeichnet, dass**
der Elektromotor (M) zum Betätigen einer Dachkomponente des Fahrzeugs eingerichtet ist, beispielsweise zum Verschieben eines Dachfensters oder Dachrollos.

3. Anordnung (10) gemäß einem der vorhergehenden Ansprüche,
**dadurch gekennzeichnet, dass**
der Elektromotor (M) als Gleichstrommotor, beispielsweise als bürstenloser Gleichstrommotor, ausgebildet ist.

4. Anordnung (10) gemäß einem der vorhergehenden Ansprüche,
**dadurch gekennzeichnet, dass**
der Elektromotor (M) mit einer Schaltung zum Unterdrücken eines Bürstenfeuers versehen ist, die beispielsweise einen kapazitiven Spannungsteiler (18) umfasst.

5. Anordnung (10) gemäß einem der vorhergehenden Ansprüche,
**dadurch gekennzeichnet, dass**
das Umschaltungsmodul (14) in eine Motorplatine (12) und/oder in ein Gehäuse des Elektromotors (M) integriert ist.

6. Anordnung (10) gemäß einem der vorhergehenden Ansprüche,
**dadurch gekennzeichnet, dass**
das Umschaltungsmodul (14) einen Feldeffekttransistor (T₁), insbesondere einen Metall-Oxid-Feldeffekttransistor, umfasst; wobei insbesondere ein erstes und ein zweites Umschaltungsmodul (14) für die erste und zweite Ansteuerungsleitung (A, B) der Anordnung vorgesehen ist.

7. Anordnung (10) gemäß einem der vorhergehenden Ansprüche,
**dadurch gekennzeichnet, dass**
das Umschaltungsmodul (14) eine Diode (Di), insbesondere einen mit der Diode (D₁) und einem Widerstand (R₁) ausgebildeten Gleichrichter, umfasst.

8. Anordnung (10) gemäß einem der vorhergehenden Ansprüche,
**dadurch gekennzeichnet, dass**
das Umschaltungsmodul (14) einen Bipolartransistor oder ein Relais umfasst.

9. Elektromotor (M) für ein Fahrzeug, beispielsweise zum Betätigen einer Dachkomponente des Fahrzeugs, umfassend
zumindest zwei Anschlüsse zum Anschließen einer ersten und einer zweiten Ansteuerungsleitung (A, B); wobei
der Elektromotor (M) über die Anschlüsse mittels Pulsweitenmodulation ansteuerbar ist; wobei
beim Ansteuern des Elektromotors (M) eine erste der zwei Ansteuerungsleitungen (A, B) als ruhige Leitung betreibbar ist und eine zweite der zwei Ansteuerungsleitungen (B, A) als aktive Leitung betreibbar ist; und wobei
dem Elektromotor (M) ein Umschaltungsmodul (14) zugeordnet ist, welches dazu eingerichtet ist, während des Betriebs des Elektromotors (M) einen Anschluss (15) eines Poltopfes des Elektromotors (M) mit der als ruhige Leitung betriebenen Ansteuerungsleitung (A, B) zu verbinden.

10. Verfahren zum Betreiben eines Elektromotors (M), beispielsweise eines Elektromotors (M) zum Betätigen einer Dachkomponente, in einem Fahrzeug, wobei
der Elektromotor (M) mittels Pulsweitenmodulation über zumindest zwei Ansteuerungsleitungen (A, B) angesteuert wird; wobei
beim Ansteuern des Elektromotors (M) eine erste der zwei Ansteuerungsleitungen (A, B) als ruhige Leitung und eine zweite der zwei Ansteuerungsleitungen (B, A) als aktive Leitung betrieben wird; wobei
ein Umschaltungsmodul (14) während des Betriebs des Elektromotors (M) einen Anschluss (15) eines Poltopfes des Elektromotors (M) mit der als ruhige Leitung betriebenen Ansteuerungsleitung (A, B) verbindet.
